**Europäisches Patentamt**

**European Patent Office**

**Office européen des brevets**

(11) Publication number: **0 225 097**
**B1**

(12) # EUROPEAN PATENT SPECIFICATION

(45) Date of publication of patent specification: **11.04.90**

(21) Application number: **86308934.8**

(22) Date of filing: **17.11.86**

(51) Int. Cl.⁵: **C 09 D 4/02, C 09 D 201/06, C 08 L 63/00, C 08 L 33/00**

(54) Two component coating composition of an anhydride containing polymer and a glycidyl component.

(30) Priority: **25.11.85 US 802154**

(43) Date of publication of application:
**10.06.87 Bulletin 87/24**

(45) Publication of the grant of the patent:
**11.04.90 Bulletin 90/15**

(84) Designated Contracting States:
**AT BE CH DE ES FR GB IT LI NL SE**

(56) References cited:
**EP-A-0 123 793**
**EP-A-8 087 969**
**DE-A-3 534 910**
**GB-A- 844 978**
**GB-A- 994 881**
**US-A-3 215 757**
**US-A-4 061 616**

The file contains technical information
submitted after the application was filed and
not included in this specification

(73) Proprietor: **E.I. DU PONT DE NEMOURS AND COMPANY**
**1007 Market Street**
**Wilmington Delaware 19898 (US)**

(72) Inventor: **Corcoran, Patrick Henry**
**25 Laurel Hill Drive**
**Cherry Hill New Jersey 08003 (US)**

(74) Representative: **Woodcraft, David Charles et al**
**BROOKES & MARTIN High Holborn House 52/54**
**High Holborn**
**London, WC1V 6SE (GB)**

# EP 0 225 097 B1

**Description**

This invention is related to a two component coating composition.

There are a wide variety of two component coating compositions available for finishing substrates. Typically with these compositions, the components are mixed together before application and then the resulting composition is applied by conventional techniques such as spraying and the composition is cured at ambient temperatures or can be cured at elevated temperatures. These compositions are used to refinish atomobiles and trucks, paint structures such as bridges and buildings, paint appliances, metal cabinets and the like.

Represenative of such compositions are shown in the following patents:

Marion et al. U.S. Patent 4,452,948 issued June 5, 1984. A two component composition is taught in which one component has at least two free carboxyl groups and a second component has anhyride groups. However, finishes formed from such a composition generally have moisture sensitivity and under high humidity conditions which are common for automobiles and trucks whiten and blister.

Gordon et al. U.S. Patent 4,507,411, issued March 26, 1985 shows a two component composition of a functionalized polymeric component and glycidyl component that in the presence of an amine, alcohol, ketimine, acetal or oxazolidine cures at ambient temperatures. However, the compositions disclosed are not useful for finishes for automobiles and trucks.

European Patent Application 0,123,793 shows a two component composition in which one component has an anhydride ring that is opened with an amine and has a second component that contains glycidyl groups. Finishes formed from such compositions are not useful for automobiles and trucks since the finishes whiten and bliser on exposure to high humidity conditions and exhibit recoat lifing when repaired within several days after the finish has been applied.

There is a need for a coating composition that cures at ambient temperatures and provides a high quality finish that is useful as an exterior finish or refinish for automobiles and trucks that has excellent adhesion to the substrate to which it is applied, good outdoor weatherability and humidity resistance and an excellent appearance.

## Summary of the Invention

A coating composition containing 20—80% by weight of two reactive binder components and 80—20% by weight of an organic carrier;

the binder contains

(a) an acrylic polymer having at least two anhydride groups and having a weight average molecular weight of about 2,000—50,000 and

(b) a component having at least two reactive glycidyl groups and

the composition contains about 0.1—5% by weight, based on the weight of the binder, of triethylenediamine.

## Detailed Description of the Invention

The film forming binder of the coating composition of this invention contains components that are mixed together before application. The film forming binder content of the composition is about 20—80% by weight of an organic carrier which usually is a solvent for the binder.

The composition forms an excellent clear coating over colored pigmented finishes. The coating has good adhesion to the pigmented finish, has exellent humidity resistance and is weatherable and durable. The composition is useful for finishing and refinishing the exterior of automobiles and trucks and the composition can be pigmented and form a colored finish. Also, the composition can be used over flexible substrates used in automobiles and trucks such as filler panels, side panels, fender extensions, moldings and other trim parts.

The composition also can be pigmented to form a colored finish. These pigmented compositions are useful as exterior original equipment and refinish coatings for automobile and trucks, as maintenance coatings for tanks, bridges, buildings such as factories and oil refineries and as industrial coatings for appliances, metal cabinets, shelves and the like.

Preferably the coating composition has a high solids content and contains about 40—70% by weight binder and 30—60% by weight of organic solvent. The binder of the composition contains about 50—90% by weight of acrylic polymer containing at least two anhydride groups and 5—50% by weight of a glycidyl containing component.

The acrylic polymer containing has a weight average molecular weight of about 2,000—50,000 determined by gel permeation chromatography using polymethyl methacrylate as a standard and preferably, has a weight average molecular weight of 4,000—25,000.

The acrylic polymer is prepared by conventional techinques in which the monomers, solvent, and conventional catalysts such as t-butyl perbonzoate are charged into a polymerization vessel and heated to about 75—200°C for about 0.5—6 hours to form the polymer.

The acrylic polymer is formed by polymerizing monomers of alkyl methacrylates, or alkyl acrylates or mixtures thereof, where the alkyl groups have 1—12 carbon atoms and ethylenically unsaturated

2

anhydrides. Optionally, the acrylic polymer can contain other components such as styrene, α-methyl styrene, acrylonitrile, methacrylonitrile in amounts of about 0.1—50% by weight.

Typical alkyl acrylates and methacrylates that can be used to form the acylic polymer are as follows: methyl methacrylate, ethyl methacrylate, propyl methacrylate butyl methacrylate, pentyl methacrylate, hexyl methacrylate, octyl methacrylate decyl methacrylate, lauryl methacrylate, methyl acrylate, ethyl acrylate, propyl acrylate, butyl acrylate, octyl acrylate, nonyl acrylate, decyl acrylate, lauryl acrylate and the like. Other components that can be used to form the acrylic polymer are acrylamide, methacrylamide, acrylo alkoxy silanes such as gamma methacryloyl propyl trimethoxy silane. Also the acrylic polymer can contain about 0.1—5% by weight of an ethylenically unsaturated acid such as acrylic acid, methacrylic acid, itaconic acid, maleic acid and the like.

Typically useful ethylenically unsaturated anhydrides are as follows: itaconic anhydride, maleic anhydride and isobutenyl succinic anhydride.

Preferred acrylic polymers are as follows: methyl methacrylate/butyl acrylate/itaconic anhydride, butyl acrylate/styrene/maleic anhydride/maleic acid, methyl methacrylate/butyl acrylate/itaconic anhydride.

The following amine containing monomers can be used in the acrylic polymers to eliminate the use of the amine catalyst: vinyl pyridine, alkyl amino ethyl methacrylate, diethyl amino ethyl acrylate, dimethyl amino ethyl methacrylate, dimethyl amino ethyl acrylate, tertiary butyl amino ethyl methacrylate, ethyl methyl amine ethyl methacrylate, ethyl methyl amino ethyl acrylate and the like.

The glycidyl component contains at least two glycidyl groups and can be oligomer or a polymer. Typical glycidyl components are as follows: sorbitol polyglycidyl ether, mannitol polyglycidyl ether, pentaerythritol polyglycidyl ether, glycerol polyglycidyl ether, low molecular weight epoxy resins such as epoxy resins of epichlorohydrin and bisphenol A., diglycidyl esters of polyols, polyglycidyl ethers of isocyanurates, such as "Denecol" EX301 from Nagase. Sorbitol polyglycidyl either is preferred since it forms a high quality finish.

Glycidyl methacrylate or acrylate containing acrylic polymers can be used such as random and block polymers of glycidyl methacrylate/butyl methacrylate. The block polymers can be prepared by anionic polymerization or by group transfer polymerization.

Typical solvents used to prepare the acrylic polymer and used as a diluent for the coating composition are as follows: toluene, xylene, butyl acetate, ethyl benzene, higher boiling aromatic hyrocarbons, amyl acetate, ethyl acetate, propyl acetate, ethylene or propylene glycol mono alkyl ether acetates.

About 0.01—5% by weight, based on the weight of the binder of the coating composition, of a catalyst triethylenediamine, is added to enhance curing of the composition.

The catalyst need not be added to the coating composition. After an article is coated, the article is passed into a chamber containing vapors. Also, to achieve curing, the catalyst can be sprayed with the coating composition using a dual spray gun.

Generally, the composition is applied by conventional technique such as spraying and electrostatic spraying. The resulting coating can be dried and cured at ambient temperatures or can be cured at elevated temperatures of 60 to 200°C. At ambient temperatures, the coating dries to a tack free condition in about 180 minutes and in about 24 hours the coating is substantially cured. In about 5—7 days, the coating is completely cured. Coatings are applied to form a finish about 0.5—5 mils thick, and preferably 1—2 mils thick. The finish has excellent weatherability.

To improve weatherability of the clear finish of the coating composition, about 0.1—5%, by weight, based on the weight of the binder, of an ultraviolet light stabilizer or a combination of ultraviolet light stabilizers can be added. These stabilizers include ultraviolet light absorbers, screeners, quenchers and specific hindered amine light stabilizers. Also, about 0.1—5% by weight, based on the weight of the binder, of an antioxidant can be added.

Typical ultraviolet light stabilizers that are useful are as follows:

Benzophenones such as hydroxydecylcbenzophenone, 2,4-dihydroxybenzophenone, hydroxybenzophenones containing sulfonic acid groups, 2,4-dihydroxy-3',5'-di-t-butylbenzophenone, 2,2,4'-trihydroxybenzophenone esters of dicarboxylic acids, 2-hydroxy-4-acryloxyethoxybenzophenone, aliphatic mono-esters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotraizoles such as hydroxyphenyltriazoles such as (2-(2'hydroxy-5'-methylphenyl) benzotriazole, 2-(2'hydroxyphenyl)benzotriazole, 2-(2'-hydroxy-5'-oxtylphenyl)naphthotriazole;

Triazines such as 3,5-dialkyl-4-hydroxyphenyl derivatives of triazine, sulfur-containing derivatives of dialkyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tripentaerythritol, phenyl- and naphthlene-substituted oxalic acid diamides, methyl-β-(3,5-di-t-butyl-4-

hydroxyphenyl)propionate, α,α'-bis(2-hydroxy-phenyl)diisopropylbenzene, 3,5'-dibromo-2'-hydroxyacetophenone, ester derivatives of 4,4-bis(4'-hydroxy-phenyl)pentanoic acid wherein there is at least one unsubstituted position ortho to the aromatic hydroxyl groups, organophosphorus sulfides such as bis(diphenyl-phosphinothioyl)monosulfide and bis(diphenyl-phosphinothioyl)disulfide, 4-benzoyl-6-(dialkylhydroxybenzyl)resorcinol, bis(3-hydroxy-4-benzoylphenoxy)diphenylsilane, bis(3-hydroxy-4-benzoylphenoxy)dialkylsilane, 1,8-naphthalimides, α-cyano-β,β-diphenylacrylic acid derivatives, bis(2-benzoxazolyl)alkanes, bis(2-naphthoxazolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl of alkyl-substituted acrylonitriles, 3-methyl-5-isopropylphenyl-6-hydroxycourmarone, 8-acetyl-3-dodecyl-7,7,9,9-tetramethyl-1,3,8-triazaspiro(4,5)-decanol-2,4-dione.

Particularly useful ultraviolet light stabilizers that can be used are hindered amines of piperidyl derivatives such as those disclosed in Murayama et al., U.S. Patent 4,061,616, issued December 6, 1977, column 2, line 65, through column 4, line 2, and nickel compounds such as [1-phenyl-3-methyl-4-decanoylpyrazolate(5)]-Ni, bis[phenyldithiocarbamato]-Ni(II), and others listed in the above Patent, column 8, line 44 through line 55.

The following blend of ultraviolet light stabilizers can be used:
2-[2'-hydroxy-3',5'-1(1-1-dimethyl-propyl)phenyl]benzotriazole and bis-[4-(1,2,2,6,6-pentamethyl-piperidyl)] 2-butyl-2-[(3,5-t-butyl-4-hydroxyphenyl)methyl] propanedioate. The stabilizers can be used in any ratio however, a 1:1 ratio of benzotriazole to propanedioate is preferred.

Another useful blend of ultraviolet light stabilizers is 2-(benzotriazole-2-VL)-4,6-bis(methylethyl-1-phenyl ethyl)phenol, and 2(3 hydroxy-3,5'-ditert amyl phenyl) benzotriazole.

Generally, when the coating composition of this invention is used as a clear coating, it is applied by conventional spraying techniques, to a color or base coat of an automobile or truck, preferably, electrostatic spraying is used. In an assembly operation, the clear coating usually is applied before the color coat is baked. The coatings are baked for about 110 to 230°C for about 20 to 40 minutes. In refinishing automobiles and trucks, the clear coating is applied to a color coat and then can be dried at ambient temperatures or baked to form a clear finish. The resulting clear coat or finish is about 1—5 mils thick preferably 1—2 mils thick and has excellent gloss, good adhesion to the color coat and excellent weatherability.

The composition can be pigmented to form a colored finish. About 0.1—5% by weight, based on the weight of the binder, of conventional pigments can be added using conventional techniques in which a mill base containing pigment, dispersant and solvent is first formed. The mill base is then mixed with the composition to form a colored composition. This composition can be applied and cured as shown above.

The following examples illustrate the invention. All parts and percentages are on a weight basis unless indicated otherwise. Molecular weights are determined by gel permeation chromatography using polymethyl methacrylate as the standard.

## Example 1

The following constituents were charged into a reactor equipped with a thermometer, stirrer, dropping funnel, nitrogen induction tube and condenser:

| | Parts By Weight |
|---|---|
| Portion 1 | |
| Xylene | 837.0 |
| Portion 2 | |
| Methylmethacrylate monomer | 585.6 |
| Butylacrylate monomer | 878.4 |
| Itaconic anhydride monomer | 488.0 |
| Portion 3 | |
| t-butyl perbenzoate | 94.0 |
| Portion 4 | |
| t-butyl perbenzoate | 20.0 |
| xylene | 100.0 |
| Total | 3003.0 |

4

Portion 1 was charged into the reactor, covered with nitrogen and heated to its reflux temperature. Portion 2 was premixed and warmed to 45°C and portions 2 and 3 were added simultaneously and dropwise to the reactor over a 150 minute period while holding the contents of the reactor at reflux temperatures. Portion 4 was premixed and added over a 30 minute period and then the resulting composition was held at its reflux temperature for an additional hour.

The resulting polymer composition had a weight solids content of 69% and the polymer had a Gardner Holdt Viscosity of Z—1. The polymer had a weight average molecular weight of 4500.

Coating composition was prepared by thoroughly blending together the following constituents:

| Portion 1 | Parts By Weight |
|---|---|
| Polymer Composition (prepared above) | 43.7 |
| Denecol® Ex622 (Sorbitol polyglycidyl ether) | 14.3 |
| DABCO® (triethylene diamine) | 0.9 |
| Butyl acetate | 41.1 |
| Total | 100.0 |

The resulting coating composition had a solids content of 45% and a viscosity of 18 seconds measured with a No. 2 Zahn Cup.

The coating composition was sprayed onto a primed metal panel coated with a pigmented acrylic lacquer. The composition cured at ambient temperature and provided a clear coat with excellent hardness and adhesion to the lacquer layer.

After 24 hours curing at an ambient temperature, a 3 mil thick film of the pigmented acrylic lacquer was applied over the clear coat. No wrinkling or adhesion loss was noted indicating that the clear coat was fully cured in 24 hours.

Panels as described above were spray coated with the above compositions under ambient temperatures and at a constant 60% relative humidity. The composition was cured at ambient temperatures and after 7 days the resulting clear finish withstood 200 double rubs with methylethyl ketone and withstood four days in a humidity cabinet maintained at 38°C and 100% relative humidity without blister or whitening of the finish or loss of adhesion of the finish.

A second coating composition was prepared by thoroughly blending together the following constituents:

| Portion 1 | Parts By Weight |
|---|---|
| Polymer composition (prepared above) | 341.15 |
| Denecol® EX622 (described above) | 114.14 |
| DABCO® (triethylene diamine) | 3.53 |
| Dimethylethanolamine | 3.53 |
| Butyl acetate | 337.65 |
| Total | 800.00 |

The resulting coating composition had a solids content of 45% and a viscosity of about 18 seconds measured with a No. 2 Zahn cup.

A 2 mil thick coating of the composition was applied to a glass substrate and cured at ambient temperatures. After 1 day, the Percoz hardness was 250 counts and the film withstood 200 double rubs with methylethyl ketone indicating the coating was fully cured.

The coating compositions was sprayed onto primed metal panels coated with a white acrylic lacquer. The composition cured at ambient temperatures for 24 hours and no discoloration was noted and adhesion and hardness of the resulting finish excellent. After curing for seven days, the finish withstood four days in a humidity cabinet maintained at 38°C and 100% relative humidity without loss of adhesion or blistering of the finish. Also, the finish could be recoated with an acrylic lacquer without wrinkling of the finish.

The above coating composition was reformulated without using an amine or diamine. The resulting composition was sprayed onto a primed metal panel coated with an acrylic lacquer and then placed in a chamber containing dimethyl ethanol amine vapors. The panel was removed from the chamber and allowed to cure at ambient temperatures. The resulting finish was hard and glossy and humidity resistant.

## Example 2

The following constituents were charged into a reactor equipped as in Example 1:

| Portion 1 | Parts By Weight |
|---|---|
| Xylene | 450 |
| **Portion 2** | |
| Butyl acrylate monomer | 908 |
| Styrene monomer | 708 |
| Maleic anhydride | 319 |
| Maleic acid | 42 |
| Propylene glycol monomethyl ether | 450 |
| t-butyl perbenzoate | 53 |
| Portion 3 | |
| Xylene | 269 |
| t-butyl perbenzoate | 9 |
| Total | 3208 |

Portion 1 was charged into the reactor and heated to its reflux temperature. Portion 2 was premixed and slowly added over 3 hours to the reactor while maintaining the contents of the reactor at reflux temperature. Portion 3 was mixed and slowly added to the reactor over a 45 minute period and then the resulting composition was held at its reflux temperature for an additional two hours.

The resulting polymer composition had a weight solids content of 50% and the polymer had a Gardner Holdt viscosity of V measured at 25°C. The polymer had a weight average molecular weight of 22,000.

A coating composition was prepared by thoroughly blending together the following constituents:

| | Parts By Weight |
|---|---|
| Polymer composition (prepared above) | 53.20 |
| Denecol® EX622 (described in Example 1) | 15.90 |
| DABCO (described in Example 1) | 0.85 |
| Butyl acetate | 100.05 |
| Total | 170.00 |

The resulting coating composition had a solids content of 25% and a viscosity of 18 seconds measured with a No. 2 Zahn cup.

The coating composition was sprayed onto a metal substrate and after 7 days of curing at ambient temperatures the coating had a Percoz hardness of 240, resisted over 150 double rubs with methylethyl ketone. After exposure to a humidity cabinet maintained at 38°C and 100% relative humidity, the coating did not whiten, blister or show loss of adhesion.

Example 3

The following constituents were charged into a reactor equipped as in Example 1:

| Portion 1 | Parts By Weight |
|---|---|
| Toluene | 304.0 |
| Portion 2 | |
| Glycidyl methacrylate | 293.2 |
| Butyl methacrylate | 195.5 |
| Toluene | 23.5 |
| 2.2 2-methylbutane nitrile | 23.5 |
| Portion 3 | |
| Toluene | 17.9 |
| 2.2 2-methylbutane nitrile | 2.9 |
| Total | 860.5 |

Portion 1 was heated to its reflux temperature. Portion 2 was premixed and slowly added to the reactor over a two hour period while maintaining the contents of the reactor at reflux temperature. Portion 3 was premixed and slowly added over a 20 minute period and the resulting reaction mixture was held at its reflux temperature for an additional 60 minutes.

The resulting polymer composition had a weight solids content of 56%. The polymer had a weight average molecular weight of 7,000.

A coating composition was prepared by thoroughly blending together the following constituents:

| | Parts By Weight |
|---|---|
| Polymer composition (Prepared in Example 1) | 40.04 |
| Polymer composition (Prepared above) | 28.67 |
| DABCO (described in Example 1) | 0.88 |
| Butyl Acetate | 30.41 |
| Total | 100.00 |

The resulting coating composition had a solids content of 45% and a viscosity of 18 seconds measured with a No. 2 Zahn cup.

Coatings were sprayed onto metal substrates and cured at ambient temperatures to form a 2 mil thick finish. After curing for 7 days at 25°C, the finishes had a Percoz hardness of 225 counts and resisted 150 double rubs with methyl ethyl ketone. The chip resistance of the finish was acceptable.

## Example 4
A coating composition was prepared by thoroughly blending together the following constituents:

|  | Parts By Weight |
|---|---|
| Polymer composition (prepared in Example 1) | 365.46 |
| Araldite® CY184 (Glycidyl ester of a diol from Ciba-Geigy Corporation) | 102.66 |
| DABCO (described in Example 1) | 3.40 |
| Dimethyl ethanol amine | 3.40 |
| Butyl acetate | 311.50 |
| Tinuvin® 328 [2-(2-hydroxy-3,5-ditertiary amyl phenol)-2-H-benzotriazole] |  |
| Tinuvin® 144 (hindered amine light stabilizer) | 6.79 |
| Total | 800.00 |

The resulting coating composition had a solids content of 45% and a viscosity of 18 seconds measured with a No. 2 Zahn cup.

The coating composition was sprayed onto a primed metal panel coated with a pigmented water borne acrylic lacquer. The coating was baked for 30 minutes at 71°C. The resulting finish was about 2 mils thick, had a gloss measured at 20° of 85 and had a general appearance which was rated as excellent. The hardness of the finish was 3.5 knoops and after 7 days the hardness was 6.5 knoops.

**Claims**

1. A coating composition comprising 20—80% by weight of two reactive binder components and 80—20% by weight of an organic liquid carrier; wherein the binder comprises:—

(a) an acrylic polymer component having at least two anhydride groups and a weight average molecular weight of about 2,000—50,000;

(b) a glycidyl component having at least two reactive glycidyl groups and the composition contains about 0.1—5% by weight, based on the weight of the binder of triethylenediamine.

2. A coating composition according to claim 1 in which the binder comprises about 50—95% by weight of the acrylic polymer component and 5—50% by weight of the glycidyl component.

3. A coating composition according to claim 1 or claim 2 in which the acrylic polymer comprises polymerised monomers of alkyl methacrylate, alkyl acrylate and ethylenically unsaturated anhydride, wherein the alkyl groups have 1—12 carbon atoms.

4. A coating composition according to claim 3 in which the acrylic polymer contains about 0.1—5% by weight styrene.

5. A coating composition according to claim 1 or claim 2 in which the acrylic polymer is a polymer of styrene, an alkyl acrylate or an alkyl methacrylate and an ethylenically unsaturated anhydride.

6. A coating composition according to any one of the preceding claims in which the glycidyl component comprises a polyglycidyl ether or a polyol.

7. A coating composition according to any one of the preceding claims which comprises 40—70% by weight of binder and 30—60% by weight of organic solvent.

8. A coating composition according to any one of the preceding claims in which the glycidyl component is a polymer of polymerised glycidyl acrylate or glycidyl methacrylate and an alkyl methacrylate, an alkyl acrylate or mixtures thereof in which the alkyl groups has 1—12 carbon atoms.

9. A substrate having a base coat comprising a layer of a pigmented coating composition and a topcoat layer firmly adhered to said base layer and comprising a composition as claimed in any one of the preceding claims.

10. A process for forming a cured surface coating on a substrate which comprises applying a layer of coating composition comprising 20—80% by weight of two reactive binder components and 80—20% by weight of an organic liquid carrier; wherein the binder comprises:—

(a) an acrylic polymer component having at least two anhydride groups and a weight average molecular weight of about 2,000—50,000.

(b) a glycidyl component having at least two reactive glycidyl groups and subjecting the layer to vapors to triethylenediamine until the layer is cured.

# EP 0 225 097 B1

## Patentansprüche

1. Überzugszusammensetzung, welche 20 bis 80 Gew.-% zweier reaktiver Bindemittelkomponenten und 80 bis 20 Gew.-% eines organischen flüssigen Trägers umfasst, worin das Bindemittel umfasst:

(a) eine Acrylpolymerkomponente mit wenigstens zwei Anhyridgruppen und einem Gewichtsmittel-Molekular-gewicht von etwa 2000 bis 50 000;

(b) eine glycidylkomponente mit wenigstens zwei reaktiven Glycidylgruppen und worin die zusammensetzung etwa 0,1 bis 5 Gew.-%, bezogen auf das Gewicht des Bindemittels, Triethylendiamin, enthält.

2. Überzugszusammensetzung nach Anspruch 1, worin das Bindemittel etwa 50 bis 95 Gew.-% der Acrylpolymerkomponente und 5 bis 50 Gew.-% der Glycidylkomponente umfasst.

3. Überzugszusammensetzung nach Anspruch 1 oder Anspruch 2, worin das Acrylpolymer polymerisierte Monomere von Alkylmethacrylate, Alkylacrylat und ethylenisch ungesättigtem Anhydrid, worin die Alkylgruppen 1 bis 12 Kohlenstoffatome haben, umfasst.

4. Überzugszusammensetzung nach Anspruch 3, worin das Acrylpolymer etwa 0,1 bis 5 Gew.-% Styrol enthält.

5. Überzugszusammensetzung nach Anspruch 1 oder Anspruch 2, worin das Acrylpolymer ein Polymer aus Styrol, einem Alkylacrylat oder einem Alkylmethacrylat und einem ethylenisch ungesättigten Anhydrid ist.

6. Überzugszusammensetzung nach einem der vorstehenden Ansprüche, worin die Glycidylkomponente einen Polyglycidylether eines Polyols umfasst.

7. Überzugszusammensetzung nach einem der vorstehenden Ansprüche, welche 40 bis 70 Gew.-% Bindemittel und 30 bis 60 Gew.-% organisches Lösungsmittel umfasst.

8. Überzugszusammenesztung nach einem der vorstehenden Ansprüche, worin die Glycidylkomponente ein Polymer aus polymerisiertem Glycidylacrylat oder Glycidylmethacrylat und einem Alkylmethacrylat, einem Alkylacrylat oder Mischungen davon, worin die Alkylgruppe 1 bis 12 Kohlenstoffatome hat, ist.

9. Substrat mit einem Basecoat, welches eine Schicht einer pigmentierten Überzugszusammensetzung und eine fest an dieser Basisschicht anhaftende Topcoat-Schicht umfasst, sowie eine Zusammensetzung, wie in einem der vorstehenden Ansprüche beansprucht.

10. Verfahren zur Bildung einer gehärteten Oberflächenbeschichtung auf einem Substrat, welches das Aufbringen einer Schicht aus einer Überzugszusammensetzung mit 20 bis 80 Gew.-% zweier reaktiver Bindemittelkomponenten und 80 bis 20 Gew.-% eines organischen, flüssigen Trägers, worin das Bindemittel

(a) eine Acrylpolymerkomponente mit wenigstens zwei Anhydridgruppen und einem Gewichtsmittel-Molekulargewicht von etwa 2000 bis 50 000,

(b) eine Glycidylkomponente mit wenigstens zwei reaktiven Glycidylgruppen umfasst, und das Einwirkenlassen von Triethylendiamindämpfen auf die Schicht, bis die Schicht gehärtet ist, umfasst.

## Revendications

1. Une composition de revêtement comprenant 20 à 80 % en poids de deux composants réactifs de liant et 80 à 20 % en poids d'un véhicule organique liquide; dans laquelle le liant comprend:

(a) un composant polymère acrylique ayant au moins deux groups anhydride et un poids moléculaire moyen en poids d'environ 2000 à 50 000;

(b) un composant glycidylique ayant au moins deux groupes glycidyle réactifs, et

la composition contient environ 0,1 à 5 % en poids, par rapport au poids du liant, de triéthylènediamine.

2. Une composition de revêtement selon la revendication 1, dans laquelle le liant comprend environ 50 à 95 % en poids du composant polymère acrylique et 5 à 50% en poids du composant glycidylique.

3. Une composition de revêtement selon la revendication 1 ou 2, dans laquelle le polymère acrylique comprend des monomères polymérisés des types méthacrylate d'alkyle, acrylate d'alkyle et anhydride éthyléniquement insaturés, où les groupes alkyles comptent 1 à 12 atomes de carbone.

4. Une composition de revêtement selon la revendication 3, dans laquelle le polymère acrylique contient environ 0,1 à 5 % en poids de styrène.

5. Une composition de revêtement selon la revendication 1 ou la revendication 2, dans laquelle la polymère acrylique est un polymère du styrène, d'un arylate d'alkyle ou méthacrylate d'alkyle et d'un anhydride éthyléniquement insaturé.

6. Une composition de revêtement selon l'une quelconque des revendications précrédentes, dans laquelle le composant glycidylique comprend un éther polyglydicylique d'un polyol.

7. Une composition de revêtement selon l'une quelconque des revendications précédentes, qui comprend 40 à 70 % en poids de liant et 30 à 60 % en poids de solvant organique.

8. Une composition de revêtement selon l'une quelconque des revendications précédentes, dans laquelle le composant glycidylique est un polymère d'acrylate de glycidyle ou méthacrylate de glycidyle polymérisé et d'un méthacrylate d'alkyle, d'un acrylate d'alkyle ou de mélanges de ceux-ci, dont le groupe alkyle compte 1 à 12 atomes de carbone.

9. Un substrat portant une couche de base comprenant une couche d'une compositoin de revêtement pigmentée et une couche de finition adhérant fermement à ladite couche de base et comprenant une composition telle que revendiquée dans l'une quelconque des revendications précédentes.

10. Un procédé pour former un revêtement de surface durci sur un substrat, qui consiste à appliquer une couche d'une composition de revêtement comprenant 20 à 80 % en poids de deux composants réactifs de liant et 80 à 20 % en poids d'un véhicule organique liquide, dans laquelle le liant comprend:

(a) un composant polymère acrylique ayant au moins deux groupes anhydride et un poids moléculaire moyen en poids d'environ 2000 à 50 000; et

(b) un composant glycidylique ayant au moins deux groupes glycidyle réactifs, et à exposer la couche à des vapeurs de triéthylènediamine jusau'à ce que le couche soit durcie.